(19)

**Europäisches Patentamt**
**European Patent Office**
**Office européen des brevets**

(11)　**EP 4 124 907 A1**

(12)　# EUROPEAN PATENT APPLICATION

(43) Date of publication:
　　**01.02.2023　Bulletin 2023/05**

(21) Application number: **22177883.0**

(22) Date of filing: **08.06.2022**

(51) International Patent Classification (IPC):
　　**G03B 17/02** (2021.01)　　　　**G03B 17/56** (2021.01)
　　**G03B 37/04** (2021.01)

(52) Cooperative Patent Classification (CPC):
　　**G03B 17/02; G03B 37/04; G03B 17/563**

(84) Designated Contracting States:
　　**AL AT BE BG CH CY CZ DE DK EE ES FI FR GB**
　　**GR HR HU IE IS IT LI LT LU LV MC MK MT NL NO**
　　**PL PT RO RS SE SI SK SM TR**
　　Designated Extension States:
　　**BA ME**
　　Designated Validation States:
　　**KH MA MD TN**

(30) Priority:　**28.07.2021　JP 2021123525**

(71) Applicant: **Ricoh Company, Ltd.**
　　**Tokyo 143-8555 (JP)**

(72) Inventors:
　　• **IKEDA, Keisuke**
　　　**Tokyo, 143-8555 (JP)**

　　• **SATOH, Hiroyuki**
　　　**Tokyo, 143-8555 (JP)**
　　• **SAISHO, Kenichiroh**
　　　**Tokyo, 143-8555 (JP)**
　　• **AMADA, Taku**
　　　**Tokyo, 143-8555 (JP)**
　　• **HATAZAKI, Soya**
　　　**Tokyo, 143-8555 (JP)**
　　• **NAKAMURA, Naoto**
　　　**Tokyo, 143-8555 (JP)**
　　• **TAKASHI, Tada**
　　　**Tokyo, 143-8555 (JP)**

(74) Representative: **J A Kemp LLP**
　　**80 Turnmill Street**
　　**London EC1M 5QU (GB)**

(54)　## IMAGE-CAPTURING DEVICE AND IMAGE-CAPTURING SYSTEM

(57)　An image-capturing device (1) includes: an imager (10) extending along a first axis (CI), the imager (10) configured to capture an image; and a grip (20) coupled to the imager (10), extending along a second axis (C2) tilted to the first axis (CI), and having an elongated shape to have a periphery thereof gripped with hand of an operator of the image-capturing device (1). The second axis (C2) is tilted relative to the first axis (C1).

EP 4 124 907 A1

**Description**

BACKGROUND

Technical Field

Embodiments of the present disclosure relate to an image-capturing device and an image-capturing system.

Related Art

As an image-capturing system that captures images of views surrounding the center of the system (or an image-capturing device), a hand-held full-spherical image capturing device incorporating multiple wide-angle lenses such as fish-eye lenses, super wide-angle lenses to capture a full-spherical image is known.

Japanese Patent No. 5910485 describes a configuration that includes an imager at one side of the long main body and a grip at the other side, the imager positioned above the grid to capture image information used to generate an omnidirectional image.

However, such an image-capturing device usually held by the user during its use, as disclosed in Japanese Patent No. 5910485, may be difficult to have the central axis of the generated omnidirectional image, parallel to the vertical direction because of the orientation of the image-capturing device during the use, and poses a challenge to facilitate the capturing of an omnidirectional image.

SUMMARY

In view of the above, embodiments of the present invention aim at facilitating the capturing of an omnidirectional image.

An image-capturing device includes: an imager extending along a first axis, the imager configured to capture an image; and a grip coupled to the imager, extending along a second axis tilted to the first axis, and having an elongated shape to have a periphery thereof gripped with hand of an operator of the image-capturing device.

An image-capturing system includes the image-capturing device described above; and an information processing device including a ranging unit configured to output information on a distance to the object based on time of light emission of the phototransmitter and time of light reception of the photosensor.

Embodiments of the present invention achieves facilitation of capturing of an omnidirectional image.

BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:

FIG. 1 is a side view of an image-capturing device according to an embodiment of the present invention;
FIG. 2 is a block diagram of a functional configuration of the image-capturing device in FIG. 1;
FIGs. 3A and 3B are schematic views of the image-capturing device in use;
FIG. 4 is an enlarged view of a portion of the image-capturing device, the portion being gripped by the user during the use;
FIGs. 5A and 5B are illustrations for describing the adverse effects of a comparative example;
FIGs. 6A and 6B are illustrations for describing the occurrence of tilt of a pillar when the pillar is gripped;
FIG. 7 is a table of measured data of ulnar flexion angle of the wrist;
FIG. 8 is a table of measured data of the bending angle of the shoulder joint;
FIG. 9 is a table of calculation results of the tilt angle of a grip;
FIG. 10 is a table of a comparison result between the present embodiment and the comparative example;
FIGs. 11A and 11B are illustrations of an image-capturing device according to modification 1 of an embodiment;
FIGs. 12A, 12B, and 12C are illustrations of the outer shapes of the bottom portion;
FIG. 13 is a table of a comparison result between modification 1 and the comparative example;
FIGs. 14A and 14B are illustrations of an image-capturing device according to modification 2 of an embodiment;
FIGs. 15A and 15B are illustrations of an image-capturing device according to modification 3 of an embodiment; and
FIG. 16 is a functional block diagram of an image-capturing system.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Hereinafter, embodiments will be described with reference to the accompanying drawings. In order to facilitate understanding of the description, the same components in the drawings are denoted by the same reference numerals as much as possible, and redundant description is omitted.

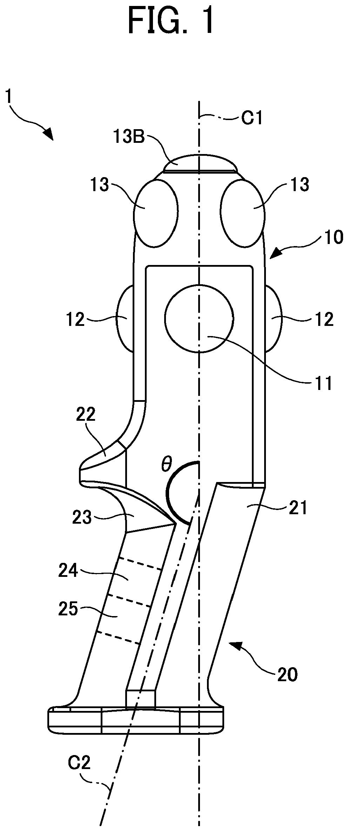

FIG. 1 is a side view of an image-capturing device 1 according to an embodiment of the present invention. The image-capturing device 1 captures an image in a wide range surrounding the image-capturing device 1. The image-capturing device 1 captures an image of the view around the image-capturing device 1 (i.e., an omnidirectional image) when gripped by an operator (a user). The full-spherical image according to an embodiment of the present invention refers to a 360-degree panoramic image (omnidirectional image) in all directions of up, down, left, and right. Alternatively, the omnidirectional image may be another type of panoramic image of a 360-degree view only on a horizontal plane.

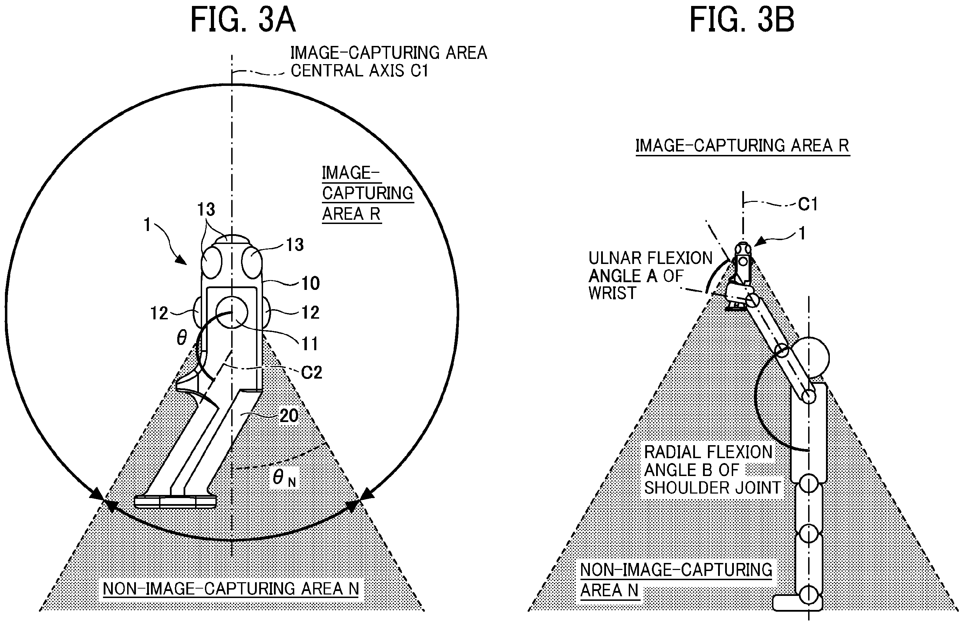

The image-capturing device 1 includes an imager 10 and a grip 20. The imager 10 is formed to extend along a predetermined center axis C1 (a first axis). The imager 10 captures an omnidirectional image whose center is the center axis C1. The "omnidirectional image whose center is the center axis" refers to, for example, a full-spherical image in which the diameter of a sphere representing the captured range of the full-spherical image (the image-capturing area R of the image-capturing device 1) is the center axis C1 (see FIG. 3A). When the omnidirectional image is a panoramic image, the center axis C1 is the central-axis line of a substantially cylindrical shape representing the image-capturing area.

The grip 20 is a portion that is gripped by the operator during the use of the image-capturing device 1. The grip 20 is coupled to the imager 10. The grip 20 has an elongated shape to allow the operator to grip its periphery with the hand.

The imager 10 is provided with various elements to acquire information used to generate an omnidirectional image. Among various types of methods for generating an omnidirectional image, the present embodiment uses a Time Of Flight (TOF) that involves a distance image composed of a group of points representing distances between the image-capturing device 1 and surrounding objects.

The imager 10 includes multiple phototransmitters 12 and multiple photosensors 13 to obtain multiple distance images, which are combined to generate one distance image.

The phototransmitters 12 include light source units 12A and 12a as semiconductor lasers, and optical systems each including an optical element such as a fisheye lens. Such phototransmitters 12 each diverge a light beam from a corresponding one of the light source units 12A and 12a to emit a light beam diverging with a wide angle.

The photosensors 13 include TOF distance image sensors 13A and 13a (hereinafter also referred to as TOF sensors 13A and 13a) and image-forming optical systems each including an optical element such as a fish-eye lens. Light beams reflected from an object to be captured surrounding the image-capturing device 1 back to the image-capturing device 1 after emitted from the multiple phototransmitters 12 are condensed on the light-receiving areas of the TOF distance image sensors 13A and 13a.

In the present embodiment, the imager 10 further includes multiple red-green-blue (RGB) imagers 11 to obtain multiple RGB images, which are combined together in the same manner as the distance images to generate one RGB image.

The RGB imagers 11 includes an optical element such as a fish-eye lens, and solid-state image sensors 11A and 11a such as complementary metal oxide semiconductor (CMOS).

Such an image-capturing device 1 according to the present embodiment creates a digital twin with distance information and RGB information in a space surrounding the image-capturing device 1 by combining the distance image and RGB image obtained in a wide range around the image-capturing device 1.

The RGB imagers 11, the phototransmitters 12, and the photosensors 13 of the imager 10 are typically arranged to face radially outward from the center axis C1.

The multiple RGB imagers 11 is typically arranged substantially uniformly in the circumferential direction around the center axis C1. The multiple phototransmitters 12 and the multiple photosensors 13 are arranged in the same manner as the RGB imagers 11.

Any of the RGB imagers 11, the phototransmitters 12, and the photosensors 13 may be arranged along the extending direction of the center axis C1 (e.g., at an upper position in the vertical direction in FIG. 1) as the photosensor 13B in FIG. 1.

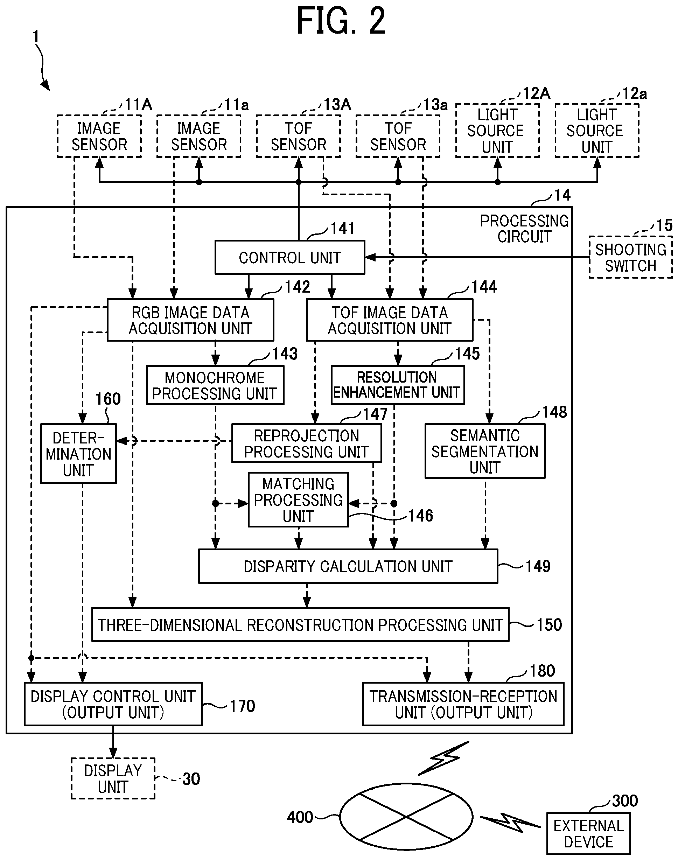

FIG. 2 is a block diagram of a functional configuration of the image-capturing device 1. The image-capturing device 1 includes a processing circuit 14, a shooting switch 15, and a display unit 30. The processing circuit 14 controls the operations of the image-capturing device 1. The processing circuit 14 is housed within the casing of the image-capturing device 1, for example. The shooting switch 15 is provided, for example, on the surface of the casing to allow the operator of the image-capturing device 1 to input a shooting-instruction signal to the processing circuit 14. As illustrated in FIG. 2, the processing circuit 14 includes a control unit 141, an RGB image data acquisition unit 142, a monochrome processing unit 143, a TOF image data acquisition unit 144, a resolution enhancement unit 145, a matching processing unit 146, a reprojection processing unit 147, a semantic segmentation unit 148, a disparity calculation unit 149, a three-dimensional reconstruction processing unit 150, a determination unit 160, a display control unit 170 as an example of an output unit, and a transmission-reception unit 180 as another example of the output unit. In FIG. 2, the flow of signals is indicated by solid-line arrows, and the flow of data is indicated by broken-line arrows.

In response to receiving an ON signal (a shooting-start signal) from the shooting switch 15, the control unit 141 outputs synchronization signals to the image sensors 11a and 11A, light source units 12a and 12A, and the TOF sensors 13a and 13A to control the entire operation of the processing circuit 14. The control unit 141 outputs a signal instructing emission of an ultrashort pulse to each of the light source units 12a and 12A, and outputs a signal instructing generation of a TOF image to each of the TOF sensors 13a and 13A at the same timing. Further, the control unit 141 outputs a signal instructing each of the image sensors 11a and 11A to capture an image. The image sensors 11a and 11A each capture an image during the emission of the light source units 12a and 12A or in a period immediately before or after that emission of the light source units 12a and 12A.

The RGB image data acquisition unit 142 acquires RGB image data captured by the image sensors 11a and 11A in accordance with the instructions to capture an image from the control unit 14, and outputs full-spherical RGB image data. The monochrome processing unit 143 performs processing for converting data type in preparation for a process of matching that data with the TOF image data acquired by the TOF sensors 13a and 13A. In this example, the monochrome processing unit 143 converts the full-spherical RGB image data into a full-spherical monochrome image.

The TOF image data acquisition unit 144 acquires the TOF image data generated by the TOF sensors 13a and 13A in accordance with the instruction to generate TOF image data, output from the control unit 141, and outputs TOF image data of the full sphere.

Notably, in the present embodiment, the TOF image data acquisition unit 144 is also referred to as a range sensor (ranging unit) that outputs information on the distance to the object to be captured, the information obtained based on the time at which each phototransmitter emits light and the time at which each photosensor receives light.

The resolution enhancement unit 145 enhances (increases) the resolution of the TOF image data of the full sphere as a monochrome image. Specifically, the resolution enhancement unit 145 replaces the value of the distance associated with each pixel of the TOF image data of the full sphere with the value (gray scale value) of the monochrome image of the full sphere, thus to use the values of the monochrome image of the full sphere. Further, the resolution enhancement unit 145 increases the resolution of the monochrome image of the full sphere up to the resolution of the full-spherical RGB image data acquired from the image sensors 11a and 11A. Such enhancement of the resolution (the conversion to high resolution) is performed by performing, for example, regular up-conversion processing. Another conversion of the resolution may be super-resolution processing involving acquiring multiple frames of the TOF image data of the full sphere, which have been continuously generated, for example; and adding the distance for each point between adjacent frames of the multiple frames.

The matching processing unit 146 extracts the amount of features on textured portions of the full-spherical monochrome image having the resolutions increased from those of the full-spherical TOF image data and the monochrome image of the full-spherical RGB image data, and performs matching processing with the extracted amount of features. For example, the matching processing unit 146 extracts an edge from each monochrome image and performs matching processing based on pieces of information on the extracted edges. Alternatively, the matching processing may involve performing featurization of changes in texture (e.g., scale invariant feature transform (SIFT)). Herein, the matching processing refers to searching for pixels corresponding to each other.

Specific examples of the matching processing include block matching. The block matching involves calculating the similarities between pixel values of a block of M × M (M is a positive integer) pixels around a pixel to be referred in one image and pixel values of a block of M × M pixels around a pixel serving as the centerpiece of search in another image, and determines, as the pixels corresponding to each other, pixels the similarity between which is the highest.

There are various methods for calculating such similarities. For example, an equation indicating a normalized correlation coefficient (NCC) may be used. With increasing NCC, the similarity is higher. The NCC becomes 1 when the pixel values of the blocks exactly match with each other.

Further, since the distance data of the textureless region is obtained from the TOF image data of the full sphere, the matching process may be weighted according to the region. For example, in the calculation of expression indicating the NCC, calculation for weighting a portion (i.e., the textureless region) of an image other than an edge may be performed.

Alternatively, selective correlation coefficient (SCC) may be used instead of the NCC.

The reprojection processing unit 147 reprojects the TOF image data of the full sphere indicating the distance to each position within the range to be measured to two-dimensional coordinates (a screen coordinate system) of the imager 11. The reprojection of the reprojection processing unit 147 refers to obtaining coordinates of the three-dimensional points calculated by the TOF sensors 13a and 13A in the images of the image sensors 11a and 11A. The TOF image data of the full sphere indicates the positions of three-dimensional points in a coordinate system with a distance-information acquisition unit (i.e., the photosensor 13), particularly a wide-angle lens at the center. This means that the three-dimensional points indicated by the TOF image data of the full sphere is reprojected onto the coordinate system having the imager 11 (mainly the fish-eye lens) as the center.

For example, the reprojection processing unit 147 performs a process of translating the coordinates of the three-dimensional point of the full-spherical TOF image data to the coordinates of the three-dimensional point for which the imager 11 is at the center and then transforming the coordinates of the three-dimensional point of the full-spherical TOF image data into a two-dimensional coordinate system (the screen coordinate system) indicated by the full-spherical RGB image data. Thus, the coordinates of the three-dimensional points of the TOF image data of the full sphere and the coordinates of the two-dimensional image information of the full sphere captured by the imager 11 are associated with each other. The reprojection processing unit 147 associates the coordinates of the three-dimensional points of the TOF image data of the full sphere with the coordinates of the two-dimensional image information of the full sphere captured by the imager 11.

The disparity calculation unit 149 calculates the disparity at each position from the differences in distance between the pixels corresponding to each other, which have been obtained from the matching process. The disparity matching processing allows a reduction in processing time and acquisition of distance information in more detail and with higher resolution by searching the pixels surrounding the reprojected coordinates (position) using the coordinates reprojected and transformed by the reprojection processing unit 147.

The semantic segmentation unit 148 performs semantic segmentation processing to generate segmentation data. In some embodiments, the disparity matching processing uses the segmentation data generated by the semantic segmentation unit 148. The use of the segmentation data enables acquisition of further more detailed and higher-resolution distance information.

In some other embodiments, the disparity matching processing may be performed only on an edge portion and a portion having a large amount of features, and a propagation process may be performed on the other portion by using, for example, an RGB image feature of the full sphere or a stochastic method using the TOF image data of the full sphere.

The semantic segmentation unit 148 uses deep learning to assign a segmentation label indicating an object to an input image within a measurement range (the range to be measured). Assigning a segmentation label to an input image enables each pixel of the TOF image data of the full sphere to be bound to any of multiple distance regions divided among the distance values, thus allowing a higher reliability of the calculation.

The three-dimensional reconstruction processing unit 150 acquires the full-spherical RGB image data from the RGB image data acquisition unit 142, reconstructs three-dimensional data of the full sphere based on the distance information output from the disparity calculation unit 149, and outputs a high-density three-dimensional point group of the full sphere in which color information is added to each three-dimensional point. The three-dimensional reconstruction processing unit 150 is an example of a three-dimensional information determiner that determines three-dimensional information.

The determination unit 160 acquires the full-spherical RGB image data from the RGB image data acquisition unit 142, acquires from the reprojection processing unit 147 the TOF image data of the full sphere converted into the two-dimensional coordinate system indicated by the full-spherical RGB image data, and determines the presence or absence of reflection of a particular object in the captured image based on the acquired data, outputting the determination result (determination as to the presence or absence of a particular object in the captured image) to the display control unit 170.

The display control unit 170 acquires the full-spherical RGB image data from the RGB image data acquisition unit 142 and causes the display unit 30 to display two-dimensional image information based on the acquired full-spherical RGB image data. In addition, the display control unit 170 causes the display unit 30 to display a display image including information indicating the determination result acquired from the determination unit 160 and two-dimensional image information.

The display control unit 170 is an example of an output unit that outputs two-dimensional image information captured by the imager 11 separately from three-dimensional information. The display unit 30 is an example of a destination device to which the two-dimensional image information is output.

In some embodiments, the display control unit 170 acquires three-dimensional data of the full sphere from the three-dimensional reconstruction processing unit 150 and causes the display unit 30 to display the three-dimensional information. Specifically, the display control unit 170 selects data to be displayed by the display unit 30, between the three-dimensional information and the two-dimensional image information according to a prescribed condition. The prescribed condition is set by the user in advance. The display control unit 170 outputs two-dimensional image information separately from three-dimensional information.

The transmission-reception unit 180 communicates with the external device 300 by wire or wireless. Specifically, the transmission-reception unit 180 transmits (outputs), via the network 400, the three-dimensional data of the full sphere output from the three-dimensional reconstruction processing unit 150 and the two-dimensional image information of the full sphere output from the RGB image data acquisition unit 142 to the external device 300 that performs three-dimensional reconstruction processing.

In the present embodiment, the two-dimensional image information captured by the imager 11 refers to original two-dimensional image information for creating two-dimensional image data for display or refers to the two-dimensional image data for display. In one example, the image-capturing device 1 creates two-dimensional image data from the original two-dimensional image information. In another example, the image-capturing device 1 outputs the original two-dimensional image information to the external device 300, and the external device 300 creates two-dimensional image data for display from the received original two-dimensional image information.

The transmission-reception unit 180 is an example of an output unit that outputs three-dimensional information, and the external device 300 is an example of a destination device to which three-dimensional information is output.

In some examples, the transmission-reception unit 180 transmits only the three-dimensional data of the full sphere without transmitting the two-dimensional image information of the full sphere. Further, the transmission-reception unit 180 may be configured by a portable storage medium such as a secure digital (SD) card or an interface circuit to communicate with a personal computer (PC).

In the present embodiment, the image-capturing device 1 includes: the TOF distance image acquisition means (unit) including the phototransmitters 12 and the photosensors 13; and RGB image acquisition means (unit) including the RGB imagers 11. In some embodiments, the image-capturing device 1 includes one of the TOF distance image acquisition means and the RGB image acquisition means. Further, the distance image acquisition means (unit) is not limited to the TOF distance image acquisition means, and may be, for example, a stereo camera. The RGB image acquisition means is not limited to the CMOS, and may be another type of image sensor. Further, the RGB image acquisition means may acquire a gray scale image instead of the RGB image.

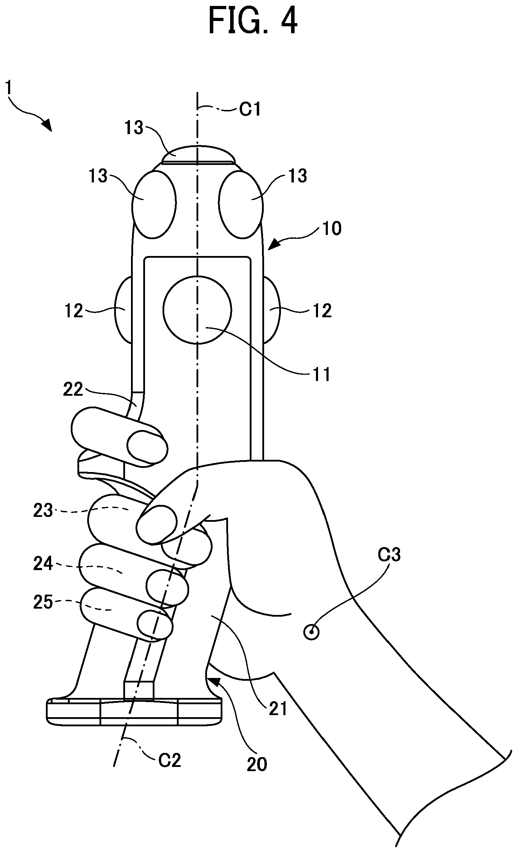

FIGs. 3A and 3B are schematic views of the image-capturing device 1 in use. FIG. 4 is an enlarged view of a portion of the image-capturing device 1, the portion being gripped by the user during the use.

As illustrated in FIGs. 3A and 3B, the image-capturing device 1 according to an embodiment has a non-image-capturing area N, which is a part of the full-spherical area with the imager 10 at the center thereof. The non-image-capturing area N is, for example, a range of a predetermined angle θN from the center axis C1 of the imager 10, at a lower position of the imager 10 during the use of the image-capturing device 1. The predetermined angle θN is preferably an acute angle. Such non-image-capturing area N is created because at least one of the phototransmitter 12 fails to emit light to a part of the range to be irradiated (captured); because at least one of the photosensors 13 fails to receive a part of light reflected from a corresponding range to be captured; or because at least one of the RGB imagers 11 fails to capture an image of a part of a corresponding range to be captured.

In the present embodiment, an image-capturing area R of the imager 10 refers to a portion of the full-spherical area, whose center is the imager 10, excluding the non-image-capturing area N. In other words, the non-image-capturing area N is referred to also as a blind spot of a full-spherical image. Hereinafter, the non-image-capturing area N is sometimes referred to as a blind spot region (non-image-capturing area N).

As illustrated in FIG. 3B, the operator holds the image-capturing device 1 above the head during use and performs shooting while maintaining the operator's posture. The operator determines that posture by adjusting the bending angle B of the shoulder joint and the ulnar flexion angle A of the wrist as appropriate to adjust the position of the image-capturing device 1 to allow the center axis C1 of the imager 10 (i.e., the center axis C1 of the image-capturing area R) to be parallel to the vertical direction. In the present embodiment, the ulnar flexion angle A of the wrist refers to the amount of movement of the wrist in the direction of ulnar flexion with respect to the extending direction of the forearm of the operator. The bending angle B of the shoulder joint refers to an angle between the direction of the trunk of the operator and the direction of the upper arm.

In particular, the image-capturing device 1 according to the present according to the present embodiment features the configuration of the grip 20 described above. As described above, the grip 20 having an elongated shape to allow the operator to grip its periphery with the hand is coupled to the imager 10. FIG. 1 indicates the center axis C2 (a second axis) of the grip 20 along the longitudinal direction of the grip 20. In the following description, the center axis C2 of the grip 20 is also referred to as the longitudinal direction of the grip 20.

Further, the grip 20 is coupled to a portion of the imager 10, the portion being proximate to the non-image-capturing area N (i.e., the blind spot region) along the center axis C1. In other words, the portion of the imager 10 along the center axis C1 is the lower side of the imager 10 when the image-capturing device 1 is in use. This arrangement allows the operator to more likely be within the non-image-capturing area N of the imager 10 as illustrated in FIG. 3B, and thus prevents the operator from being reflected in an omnidirectional image.

Further, in the present embodiment, as illustrated in FIG. 1 and other figures, the grip 20 is formed to allow the longitudinal direction (i.e., the center axis C2) of the grip 20 to be tilted relative to the center axis C1 of the imager 10.

The tilt of the grip 20 will be further described. As illustrated in FIG. 4, the grip 20 is formed in a shape in which the rotation axis C3 of the ulnar flexion and radial flexion (bending) of the operator's wrist (hand grasping the grip 20) is orthogonal to the center axis C1 of the imager 10 so as to allow the operator to grasp the grip 20. This configuration facilitates the positional adjustment of the center axis C1 of the imager 10 by merely adjusting the ulnar flexion and radial flexion (bending) of the wrist along one-axis.

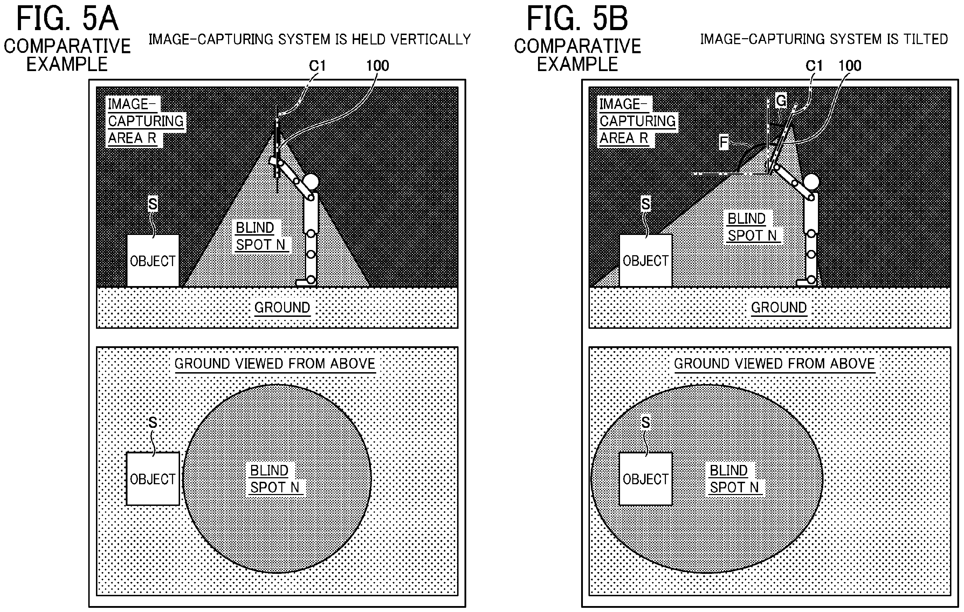

In this case, the direction in which the longitudinal direction (the center axis C2) of the grip 20 is tilted relative to the center axis C1 of the imager 10 is a direction in which the ulnar flexion angle A of the operator's wrist (hand grasping the grip 20) (see FIG. 3B) or the radial flexion angle (bending angle B) is reduced, unlike the configuration (FIGs. 5A and 5B) in which the imager 10 and the grip 20 are linearly arranged when the center axis C1 of the image-capturing device 1 in use is along the vertical direction. In other words, the longitudinal direction C2 of the grip 20 is tilted relative to the center axis C1 of the imager 10 in a direction to reduce an angle of the ulnar flexion or the radial flexion of the hand. Tilting the longitudinal direction C2 of the grip 20 relative to the center axis C1 of the imager 10 reduces the angle of the ulnar flexion or the radial flexion of the hand greater than aligning the longitudinal direction C2 of the grip 20 with the center axis C1 of the imager 10, the center axis C1 being a vertical direction of the image-capturing device 1 in use.

Herein, an angle between the direction (the upward direction in FIG. 1) in which the imager 10 extends from the coupling portion of the imager 10 and the grip 20 and the direction (the left-obliquely downward in FIG. 1) is defined as a tilt angle θ of the longitudinal direction (i.e., the center axis C2) of the grip 20 relative to the center axis C1 of the imager 10. In other words, a tilt angle of the longitudinal direction C2 of the grip 20 relative to the center axis C1 of the imager 10 is an angle between a first direction in which the imager 10 extends from the portion of the imager 10 to which the grip 20 is coupled and a second direction in which the grip 20 extends from the portion. In this case, the tilt angle θ preferably ranges from 125 to 175 degrees.

Such a configuration of the image-capturing device 1 in which the longitudinal direction (i.e., the center axis C2) of the grip 20 is tilted relative to the center axis C1 of the imager 10 facilitates adjustment of the center axis C1 of the imager 10 in the vertical direction as well as capturing of an omnidirectional image while the operator holds the image-capturing device 1 by hand to capture an image.

This configuration further facilitates adjustment of the non-image-capturing area N (i.e., the blind spot) of the imager 10 to be within a desired range (e.g., the lower side of the imager 10 in the vertical direction), and thus enables a smaller blind spot in a captured omnidirectional image and prevents the operator from being unintentionally within the image-capturing area R to be reflected in a captured image.

In some cases, the ulnar flexion angle (or the radial flexion (bending) angle) of the wrist is to be increased while the operator holds the image-capturing device 1 with the center axis C1 of the image-capturing area parallel to the vertical direction, which is intentionally oriented by the operator during use. This causes the operator difficulty in moving the wrist sufficiently or comfortably within the movable range of the wrist. This might cause the operator to apply unnatural force to the image-capturing device 1 and produce camera shake to more likely cause image blurring. However, the present embodiment enables a posture of the ulnar flexion (or radial flexion) of the wrist, which allows the operator to move the wrist without difficulty (or comfortably) within the movable range of the wrist when the operator adjusts the center axis C1 of the imager 10 in the vertical direction, because of the tilting of the longitudinal direction of the grip 20 in the direction in which the ulnar flexion angle A or the radial flexion angle of the wrist (the operator's hand gripping the grip 20) is reduced. This prevents the occurrence of image blurring of a captured image due to camera shake.

Such a reduction in the ulnar flexion angle of the operator's wrist (hand) gripping the grip 20 reduces the load on the operator during the operation of the image-capturing device 1 and further facilitates capturing of an omnidirectional image.

As illustrated in FIG. 1, the grip 20 includes a first finger support 21, a second finger support 22, a third finger support 23, a fourth finger support 24, and a fifth finger support 25.

As illustrated in FIG. 4, the first finger support 21 is configured to contact the base portion of the first finger (the thumb) of the operator when gripped by the operator. The second finger support 22 is configured to contact the second finger (the index finger) of the operator when gripped by the operator. The third finger support 23 is configured to contact the third finger (the middle finger) of the operator when gripped by the operator. The fourth finger support 24 is configured to contact the fourth finger (the ring finger) of the operator when gripped by the operator. The fifth finger support 25 is configured to contact the fifth finger (the little finger) of the operator when gripped by the operator.

The third finger support 23, the fourth finger support 24, and the fifth finger support 25, which are referred to as a support are provided along the extending direction (i.e., the center axis C2) of the grip 20.

The first finger support 21 is disposed so as to face the third finger support 23, the fourth finger support 24, and the fifth finger support 25, which are disposed across the central axis C2 coincident with the extending direction (the longitudinal direction) of the grip 20, from the first finger support 21. The longitudinal direction of the grip 20 is tilted relative to the center axis C1 of the imager 10, in a direction from the first finger support 21, the third finger support 23, the fourth finger support 24, to the fifth finger support 25.

Such an arrangement of the first to fifth finger supports 21 to 25 facilitates the operator's posture of gripping the grip 20 as illustrated in FIG. 4. This reliably enables adjustment of the center axis C1 of the imager 10 in the vertical direction by the operator's movement of the wrist (i.e., the ulnar flexion movement or the radial flexion movement) and thus further facilitates the positional adjustment of the center axis C1 of the imager 10.

The first finger support 21 and the third finger support 23 are proximate to the imager 10 in the extending direction (i.e., along the center axis C2) of the grip 20. In other words, the first finger support 21 and the third finger support 23 are closer to the imager 10 than the fourth finger support 24 and the fifth finger support 25 in the extending direction, or the longitudinal direction of the grip 20. The second finger support 22 is between the imager 10 and the third finger support 23.

Referring to FIGs. 5A, 5B, 6A, and 6B to 7, the advantageous effects of the grip 20 being bent respect to the imager 10 are described according to the present embodiment. In a comparative example, an image-capturing device 100 includes an imager 10 and a grip 20, which are linearly formed.

FIGs. 5A and 5B are illustrations for describing the adverse effects of a comparative example. FIG. 5A is an illustration of an image-capturing device 100 being vertically held by the operator, according to a comparative example. Similarly, FIG. 5B is an illustration of the image-capturing device 100 according to the comparative example being kept tilted with a relatively small ulnar flexion angle. The upper illustrations of FIGs. 5A and 5B are side views, and the lower illustrations of FIGs. 5A and 5B are plan views.

With an omnidirectional image captured by the image-capturing device 100 having a non-image-capturing area N (i.e., the blind spot region) at a lower part of the image-capturing device 100, the configuration of FIG. 5A in which the image-capturing device 100 is held above the operator's head while being oriented perpendicularly to the ground to have the center axis C1 of the image-capturing area R perpendicular to the group reduces a non-image-capturing area N in the vicinity of the ground and advantageously causes the user (the operator) to less likely enter the image-capturing area R, unlike the configuration of FIG. 5B in which the center axis C1 is tilted.

FIGs. 5A and 5B are illustrations of tasks carried out by the image-capturing device 100 (i.e., the image-capturing device 100 captures an image of an object S on the ground). In this case, the center axis C1 of the image-capturing device 100 being tilted FIG. 5B relatively increases the non-image-capturing area N (i.e., the blind spot region) of the image-capturing device 100, and causes the object S to be within the non-image-capturing area N (i.e., the blind spot region), thus resulting in failure to capture an appropriate omnidirectional image.

Capturing an image by a simple linear columnar image-capturing system will be considered. As an example, a case where the bending angle B (see FIG. 3B) of the shoulder joint is set to 150 degrees is considered.

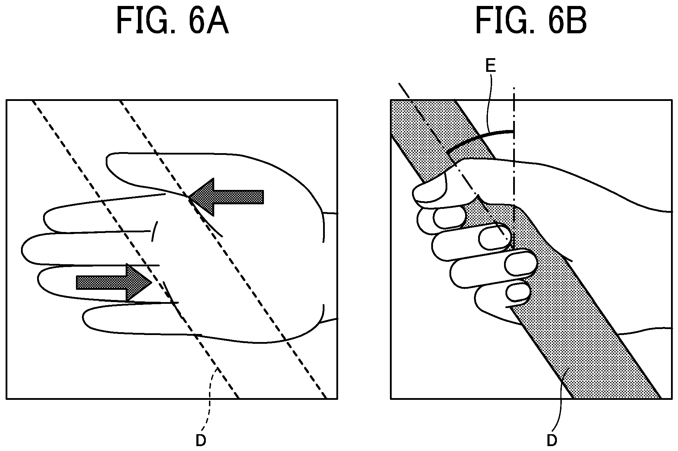

FIGs. 6A and 6B are illustrations for describing the occurrence of tilt of a pillar D when the pillar is gripped. When a simple straight pillar D is gripped as illustrated in FIG. 6A, an angle E of about 10 to 20 degrees is formed between the hand and the pillar D griped with the relative position between the base of the thumb and the index finger to the little finger indicated by the arrows as illustrated in FIG. 6B.

In consideration of this, the imager 10 of the image-capturing device 1 fails to be perpendicular to the ground unless the ulnar flexion angle A of the wrist satisfies the following equation (1):

$$\text{Bending Angle of Shoulder Joint B (150 degrees)} - \text{Angle E Between hand and Pillar}$$
$$\text{D Gripped by Hand (10 to 20 degrees)} - \text{Ulnar Flexion Angle of Wrist A} = \text{Image-Capturing}$$
$$\text{System angle (90 degrees)} \qquad (1)$$

The image-capturing system angle on the right side of the above equation (1) is the angle between the center axis C1 of the imager 10 and the horizontal direction. In order to satisfy the condition of the above equation, the ulnar flexion angle A of the wrist is to be about 40 to 50 degrees.

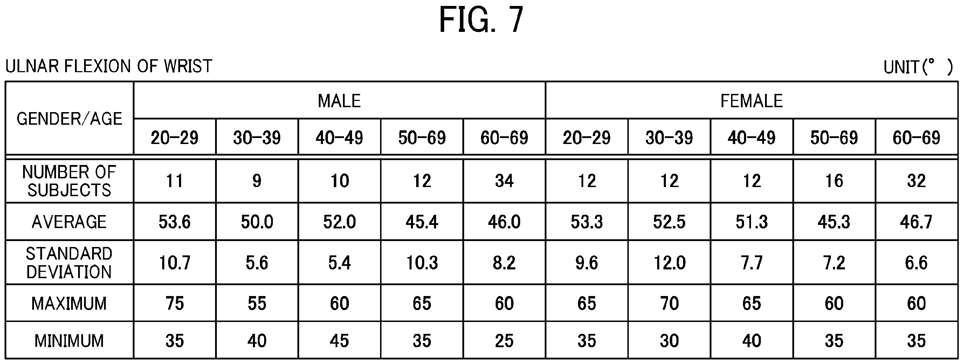

There is a finding that bending the wrist with an ulnar flexion angle of about 40 to 50 degrees may be a heavy load for a human. FIG. 7 is a table of measured data of the ulnar flexion angle A of the wrist. The table in FIG. 7 is the movable range of the ulnar flexion of the wrist for age and sex obtained from the measurement data of the database of the infrastructure for the elderly of the Human Life Engineering Research Center of 2001 (https://www.hql.jp/database/). Focusing on the average value of the movable range of the ulnar flexion of the wrist, the ulnar flexion angle is approximately 50 degrees in any age of 20 to 69 years old. As illustrated in equation (1) above, when the bending angle B of the shoulder joint is increased to 150 degrees, the ulnar flexion angle A of the wrist is to be 40 to 50 degrees. This means that even a person having an average movable range of the wrist to the vicinity of the limit of the ulnar flexion movable range of the wrist.

For this reason, the image-capturing device 100 according to the comparative example held by a person having a range of motion equal to or less than the average may have the center axis C1 of the imager 10 tilted as illustrated in FIG. 5B because a sufficient ulnar flexion angle A is not obtained. For example, since the minimum value of the ulnar flexion movable range of the wrist of a male aged 60 to 69 years is 25 degrees, even if the wrist is bent up to the limit, the image-capturing device 100 still tilts by a tilt angle of 15 to 25 degrees. In addition, when the wrist is bent to the limit of the movable range as described above, a force is generated in the wrist, and as a result, an image blur due to camera shake is easily generated.

The image-capturing device 100 according to the comparative example, i.e., the mage-capturing system of a simple straight pillar likely causes any of the following issues: The operator fails to bend the wrist to a desired angle (i.e., until the image-capturing device 100 turns vertical to the ground), and the center axis C1 of the imager 10 of the image-capturing device 100 tilts; and camera shake is likely to occur because of the operator's capturing an image while forcedly bending the wrist.

In the image-capturing device 1 according to an embodiment, however, a tilt angle $\theta$ is provided between the center axis C1 of the imager 10 (i.e., the center axis C1 of the image-capturing area passing through the center of the image-capturing area R) and the extending direction (the center axis C2) of the grip 20. This configuration enables the operator to hold the image-capturing device 1 above the head with a wrist posture that allows the operator to move the wrist comfortably as appropriate within the movable range (the ulnar flexion range) of the wrist, so as to orient the imager 10 of the image-capturing device 1 vertical to the ground.

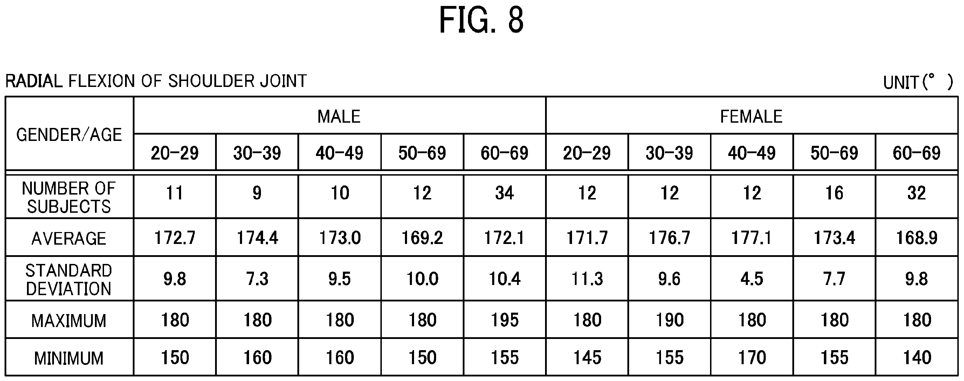

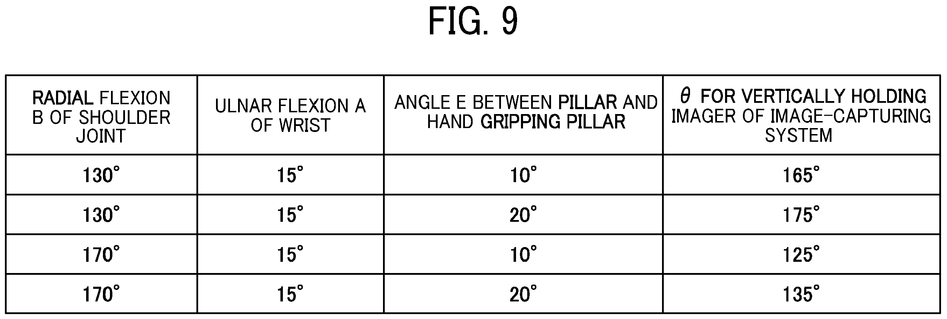

The following describes a method of setting the tilt angle $\theta$ of the grip 20 will be described with further reference to FIGs. 8 and 9. FIG. 8 is a table of measured data of the bending angle B of the shoulder joint. FIG. 9 is a table of calculation results of the tilt angle $\theta$ of the grip 20. The table in FIG. 8 is the movable range of the ulnar flexion of the wrist for age and sex obtained from the measurement data of the database of the infrastructure for the elderly of the Human Life Engineering Research Center of 2001.

The tilt angle $\theta$ of the grip 20 is set as follows to allows users of more ages and genders to use the image-capturing device 1: For the ulnar flexion angle A of the wrist in the image-capturing posture, an angle of 15 degrees (°) that allows bending of the wrist comfortably without applying a force is a reference value of the ulnar flexion of the wrist. This reference value is determined in consideration of holding the grip with an allowance of an angle of 10 degrees (°) for a further movement of the wrist within the movable range, assuming that some users fail to bend the wrist to an angle of greater than 25 degrees with reference to the minimum value of 60 to 69 years old males in FIG. 7. For the bending angle B of the shoulder joint in an image-capturing posture, similarly to the ulnar flexion angle A of the wrist, a potential radial flexion range (potential range of the bending angle B) of the wrist in the natural holding posture was narrowed with reference to the measurement data illustrated in FIG. 8. The minimum value of the range of the bending angle B was set to 130 degrees (°) in consideration of the minimum value of 140 degrees for women aged 60 to 69 years and an allowance of an angle of 10 degrees for a further movement of the wrist. The maximum value of the range of the bending angle B was set to 170 degrees (°), which has been determined in consideration of an allowance of an angle of 10 degrees for the radial flexion angle B of 180 degrees (°) at which the arm is raised to the vertical. In other words, the radial flexion angle B of the shoulder joint in a natural holding posture is defined to range from 130 degrees to 170 degrees. The angle E between the pillar D and the hand gripping the pillar D in FIG. 6B is defined to range from 10 to 20 degrees.

Using the angles A, B, and E as defined above, the tilt angle $\theta$ is calculated to range from 125 to 175 degrees (°) as illustrated in FIG. 9.

Through the above-described setting method, the inventors of the present invention have conceived of the tilt angle $\theta$ of the grip 20 ranging from 125 to 175 degrees, which are preferable in the present embodiment.

Notably, with the grip 20 having a tilt angle $\theta$ of greater than 175 degrees, the ulnar flexion angle of the wrist of the operator is to be increased to adjust the center axis C1 of the imager 10 in the vertical direction. This means that an ulnar flexion angle sufficient to adjust the center axis C1 of the imager 10 in the vertical direction might be difficult to obtain irrespective of the differences in the movable range of the ulnar flexion movement between age and sex groups as illustrated in FIG. 7. Notably, with the grip 20 having a tilt angle $\theta$ of less than 125 degrees, the radial flexion angle of the wrist of the operator is to be increased in the opposite direction of the ulnar flexion direction to adjust the center axis C1 of the imager 10 in the vertical direction. Same as the ulnar flexion movement, a radial flexion angle sufficient to adjust the center axis C1 of the imager 10 in the vertical direction might be difficult to obtain.

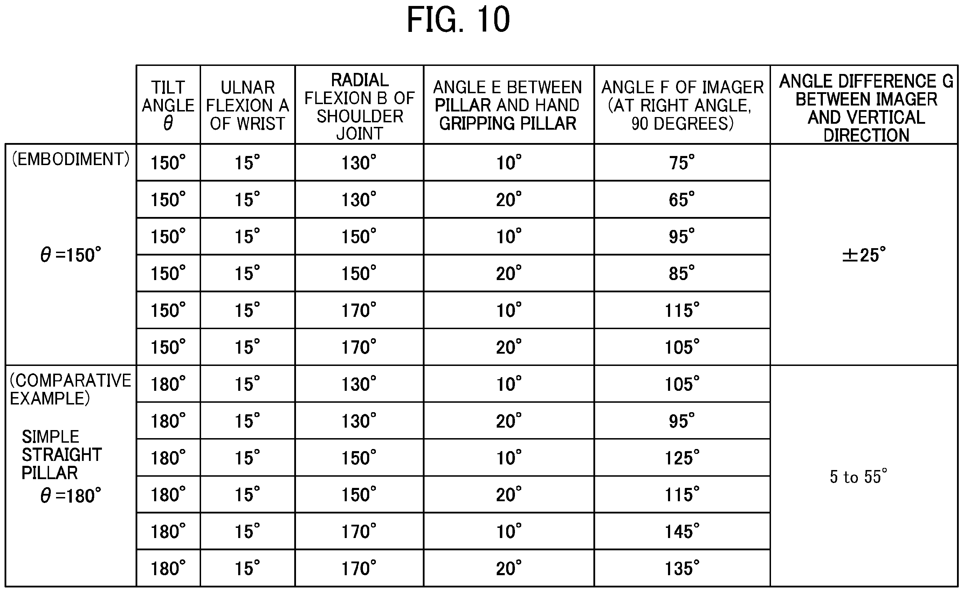

Next, the advantageous effects of the present embodiment will be described with reference to FIG. 10. FIG. 10 is a table of a comparison result between the present embodiment and the comparative example.

As illustrated in FIG. 10, a configuration in which the tilt angle $\theta$ is 150 degrees is considered as an example. The angle F of the imager 10 was calculated for variations in the bending angle B of the shoulder joint from 130 to 170 degrees and variations in the angle E between the pillar D and the hand gripping the pillar D from 10 to 20 degrees when the image-capturing device 1 is held by the operator as illustrated in FIG. 3. As illustrated in FIG. 5B, the angle F of the imager is 90 degrees when the center axis C1 is coincide with the vertical direction. In this case, the horizontal direction (i.e., a direction away from the operator, or in the left direction in FIG. 5B) is 0 degree. Further, a difference G (see FIG. 5B) between the angle F of the imager 10 and the vertical direction was calculated. As illustrated in FIG. 5B, the difference G indicates the degree of tilt of the center axis C1 of the imager 10 relative to the vertical direction.

The image-capturing device 100 according to a comparative example as illustrated in FIG. 5 has a configuration in which the tilt angle $\theta$ is 180 degrees, that is, a simple linear pillar in which the imager 10 and the grip 20 are coupled to each other in a straight line. In the comparative example, the angle F of the imager 10 and the difference G were calculated by setting the same ulnar flexion angle A, bending angle B, and angle E between the pillar D and the hand gripping the pillar D as those of the present embodiment.

As illustrated in FIG. 10, in the present embodiment at which the tilt angle $\theta$ is 150 degrees, the angle F of the imager 10 of the image-capturing device 1 ranges from 75 to 115 degrees, and the angle G with respect to the vertical direction is in the range of $\pm 25$ degrees in the range of the estimated ulnar flexion angle A of the wrist, the range of the bending angle B of the shoulder joint, and the range of the angle E between the pillar D and the hand gripping the pillar D.

By contrast, in the comparative example at which the tilt angle $\theta$ is 180 degrees, the angle F of the imager 10 of the image-capturing device 100 ranges from 95 to 145 degrees, and the angle G with respect to the vertical direction ranges from 5 to 55 degrees (°). In other words, the imager 10 is tilted relative to the vertical direction at a tilt angle of 55 degrees at maximum. When the present embodiment is compared with the comparative example, the present embodiment allows a reduction in the tilt of the imager 10 by 30 degrees in absolute value.

The difference G between the angle F of the imager 10 and the image-capturing device 1 and the vertical direction 1 in the worst of the assumed postures is the smallest at the tilt angle $\theta$ of 150 degrees, but is constantly smaller than the case of $\theta$ = 180 degrees within the range of 125 to 175 degrees described above.

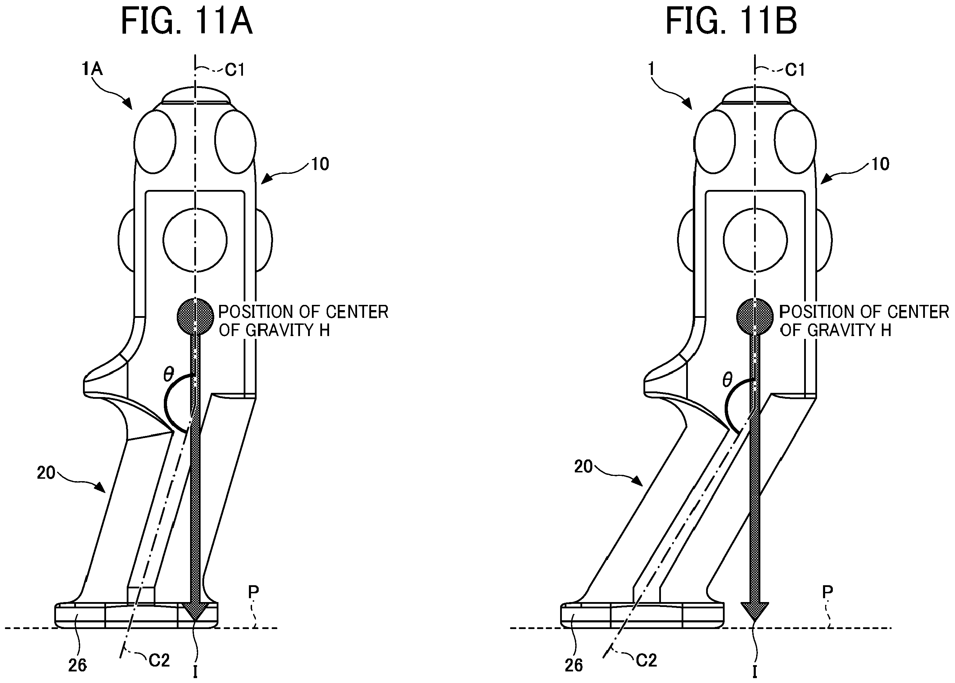

Next, modification 1 will be described with reference to FIGs. 11A, 11B, 12A, 12B, and 12C to 13. FIGs. 11A and 11B are illustrations of an image-capturing device 1A according to modification 1 of an embodiment. FIG. 11A is an illustration of a configuration of the image-capturing device 1A according to modification 1. FIG. 11B is an illustration of a configuration of the image-capturing device 1 according to the above-described embodiment.

As illustrated in FIG. 11A, the grip 20 of the image-capturing device 1A according to modification 1 has a bottom portion 26 at the end opposite to the imager 10 along the central axis C2 (the extending direction, or the longitudinal direction). The bottom portion 26 has the outer shape to allow the projection point I at which the position of center of gravity H of the image-capturing device 1A is projected on a virtual plane P including the bottom portion 26, to fall within the range of the bottom portion 26.

A case is considered in which a flat surface is provided at a lower portion of the image-capturing device 1A to form the bottom portion 26, and the image-capturing device 1A is placed on a horizontal surface such as the ground or a desk. In the image-capturing device 1 of FIG. 11B, the projection point I of the center of gravity H on the virtual plane P is outside the range of the outermost shape of the bottom portion 26. Such an image-capturing device 1 fails to stand by itself and falls down. However, the image-capturing device 1A according to modification 1 in FIG. 11A, whose projection point I of the center of gravity H on the virtual plane P is within the range of the outermost shape of the bottom portion 26. Such an image-capturing device 1A can stand by itself.

Such an image-capturing device 1A according to modification 1 that can stand by itself on the horizontal surface such as the ground or a desk enables capturing of images via wireless control and will be widely available in applications other than gripping operation.

In order to make the projection point I of the center of gravity H of the image-capturing device 1A fall within the range of the bottom portion 26 as in modification 1, for example, as illustrated in FIG. 11A, the tilt angle $\theta$ of the grip 20 is to be increased to be larger than that in FIG. 11B in which the projection point I is away from the bottom portion 26. Such a tilt angle $\theta$ is 165 degrees, for example. In some embodiments, a parameter other than the tilt angle $\theta$ (e.g., the area of the bottom portion 26 is increased) may be adjusted to allow the projection point I of the center of gravity H of the image-capturing device to be within the range of the bottom portion 26.

Further, the virtual plane P of the bottom portion 26 is preferably orthogonal to the center axis C1 of the imager 10. In other words, the normal direction of the bottom portion 26 is preferably coincident with the center axis C1. This arrangement that allows the projection point I of the center of gravity H to be within the range of the bottom portion 26 enables the image-capturing device 1A to reliably stand by itself. Further, the image-capturing device 1A according to modification 1 in which the center axis C1 of the imager 10 is vertical to the bottom portion 26 enables minimization of the blind spot (non-image-capturing area) on the plane on which the image-capturing device 1A is placed.

As long as the image-capturing device 1A can stand by itself, the normal direction of the bottom portion 26 may not be coincide with the center axis C1 of the imager 10.

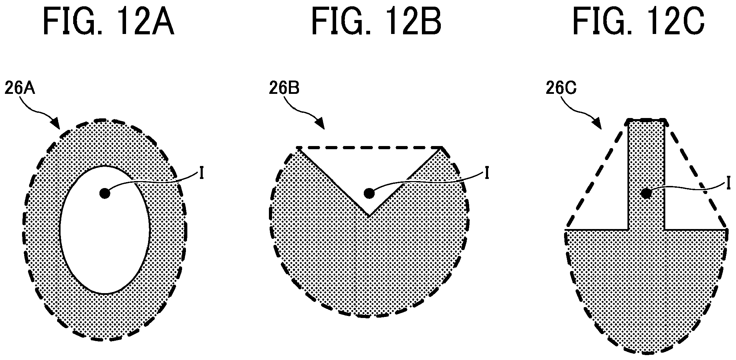

FIGs. 12A, 12B, and 12C are illustrations of the outer shapes of the bottom portion 26. The bottom portion 26 of the grip 20 may have any outer shape such as a circular shape, an elliptical shape, or a rectangular shape as long as the projection point I of the center of gravity H of the image-capturing device 1A is within the range of the bottom portion 26. In addition, the outer shape may be a cylindrical shape like the bottom portion 26A as illustrated in FIG. 12A, a shape in which a part of a circle is missing in a fan shape like the bottom portion 26B as illustrated in FIG. 12B, or a substantially T-shape in which a part of an ellipse is missing like the bottom portion 26C as illustrated in FIG. 12C.

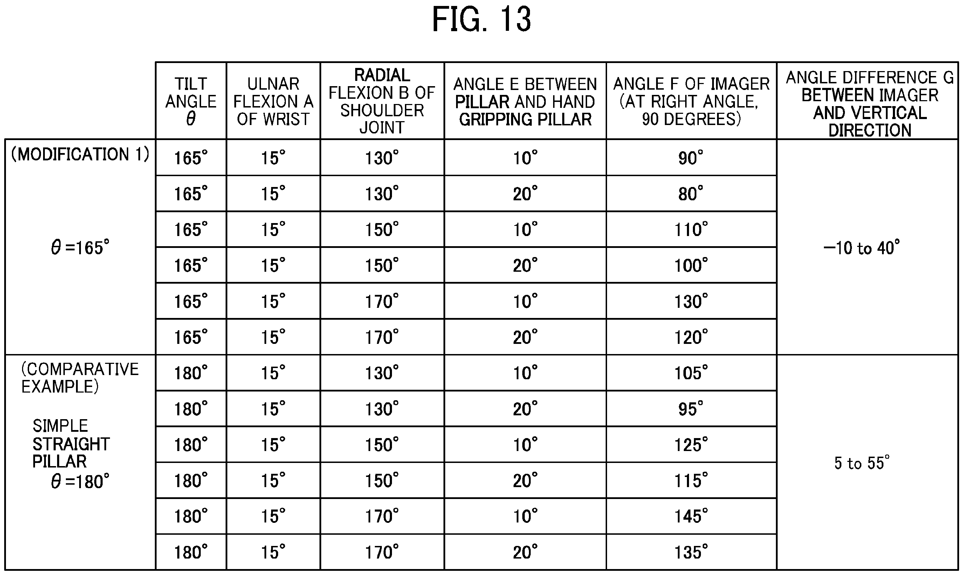

The following describes the advantageous effects of modification 1 with reference to FIG. 13. FIG. 13 is a table of a comparison result between modification 1 and the comparative example.

As illustrated in FIG. 13, modification 1 in which the tilt angle θ of the grip 20 is 165 degrees satisfies the range of the tilt angle θ (125 to 175 degrees) and achieves the image-capturing device 1A that can stand by itself. Various parameters and calculation procedures illustrated in FIG. 13 are the same as those illustrated in FIG. 10. The comparative example is also the same as in FIG. 10.

Similarly to the case in which the tilt angle θ is 150 degrees as illustrated in FIG. 10, when the bending angle B of the shoulder joint is changed in a range from 130 to 170 degrees, and the angle E between the pillar and the hand gripping the pillar is changed in a range from 10 to 20 degrees, the angle F of the imager 10 ranges from 80 to 130 degrees, and the angle G relative to the vertical direction ranges from -10 to +40 degrees as illustrated in FIG. 13. The configuration of modification 1 achieves an angle difference of 40 degrees at maximum between the imager 10 and the vertical direction, which is smaller than that of the comparative example.

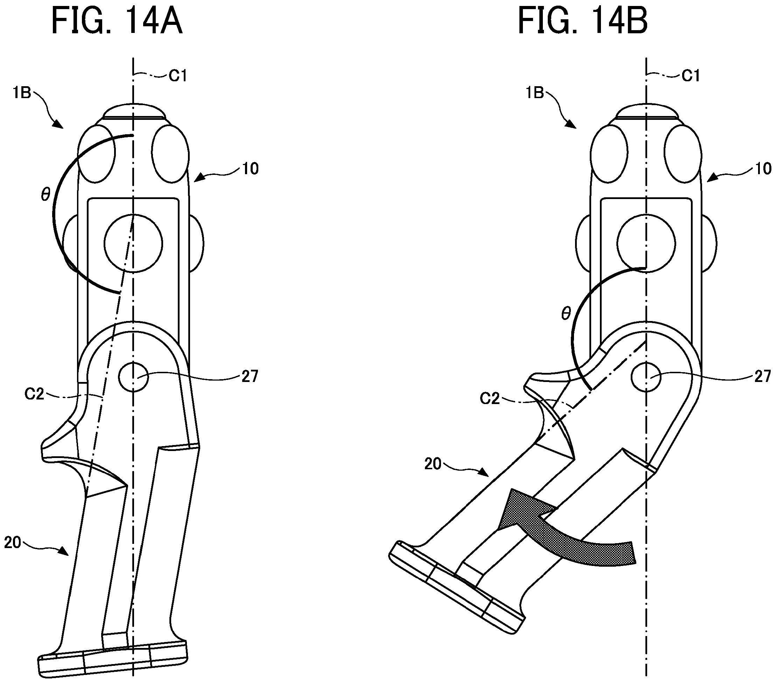

Next, modification 2 will be described with reference to FIGs. 14 A and 14B. FIGs. 14A and 14B are illustrations of an image-capturing device 1B according to modification 2 of an embodiment.

As illustrated in FIGs. 14A and 14B, the image-capturing device 1B includes a tilt-angle adjuster 27 that adjusts the tilt angle of the grip 20 relative to the imager 10. The tilt-angle adjuster 27 serves as, for example, a rotation shaft that rotatably couples the imager 10 to the grip 20 as illustrated in FIGs. 14A and 14B.

This configuration enables a tilt angle θ that allows the user (operator) to most comfortably hold the grip 20 to be set according to the characteristics of the user. For example, with an increase in the tilt angle θ to reduce the difference between the center axis C1 of the imager 10 and the center axis C2 (the extending direction) of the grip 20 as illustrated in FIG. 14A, the operator (the user) can easily position the center axis C1 in the vertical direction by further increasing the ulnar flexion of the wrist. For example, with a reduction in the tilt angle θ to increase the difference between the center axis C1 of the imager 10 and the center axis C2 (the extending direction) of the grip 20 as illustrated in FIG. 14B, the operator (the user) whose the range of the ulnar flexion of the wrist is small can easily position the center axis C1 in the vertical direction.

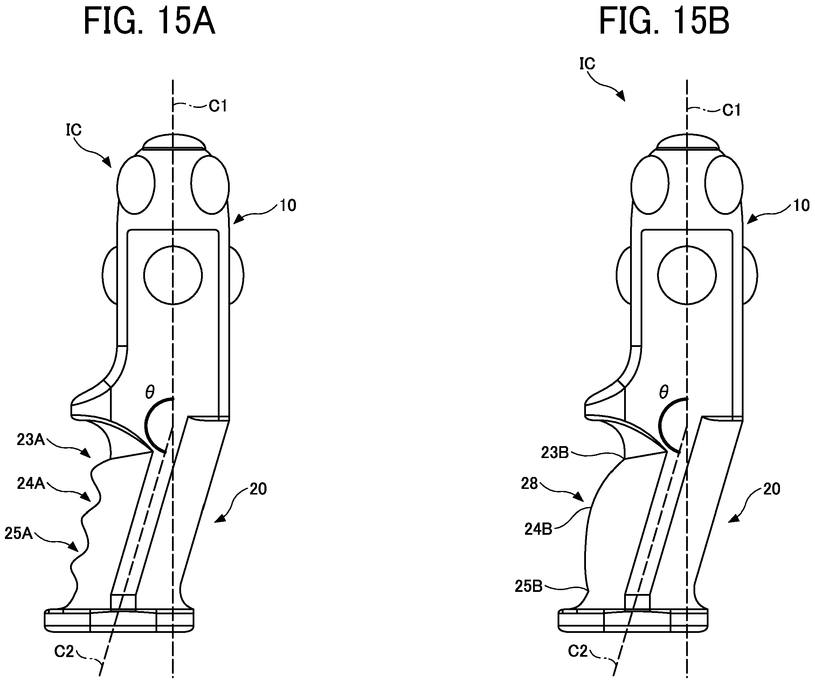

Next, modification 3 will be described with reference to FIGs. 15A and 15B. FIGs. 15A and 15B are illustrations of an image-capturing device 1C according to modification 3 of an embodiment.

As illustrated in FIG. 15, in order to increase the fit between the hand and the grip 20, the portions of the grip 20 held by the middle finger to the little finger (the third finger support 23, the fourth finger support 24, and the fifth finger support 25) may have a shape such as a curved surface instead of a straight line.

For example, as illustrated in FIG. 15A, the third finger support 23A, the fourth finger support 24A, and the fifth finger support 25A may be formed as concave surfaces recessed toward the central axial C2 of the grip 20. In some embodiments, at least one of the third finger support 23A, the fourth finger support 24A, and the fifth finger support 25A may be a concave surface.

As illustrated in FIG. 15B, the third finger support 23A, the fourth finger support 24A, and the fifth finger support 25A may be formed as a convex surface 28 protruding in the opposite direction of the direction in which the third finger support 23A, the fourth finger support 24A, and the fifth finger support 25A are curved (recessed) as illustrated in FIG. 15A. In this case, the third finger support, the fourth finger support, and the fifth finger support are integrated together (forms a single integrated portion) along the extending direction (the longitudinal direction) of the grip 20 to form a convex surface 28. The convex surface 28 is curved such that the surface of a portion 24B corresponding to the fourth finger support 24A is furthest from the center axis C2, and the surfaces of a portion 23B corresponding to the third finger support 23A and a portion 25B corresponding to the fifth finger support 25A are closer to the center axis C2 than the surface of the portion 24B.

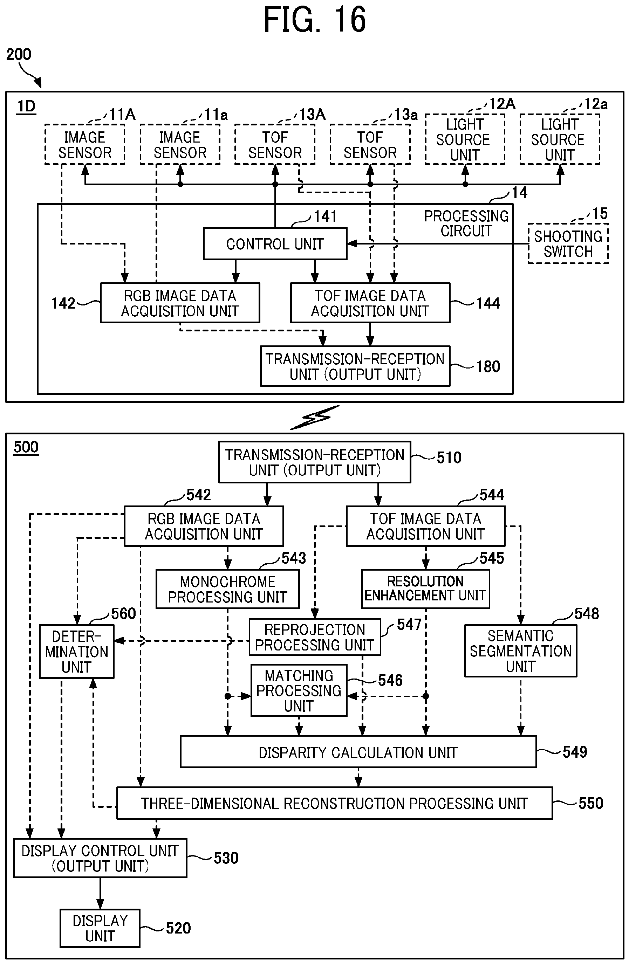

Another embodiment will be described with reference to FIG. 16. FIG. 16 is a functional block diagram of an image-capturing system according to an embodiment. In the above-described embodiment as described with reference to FIG. 2, the image-capturing device 1 includes the functions from acquisition of an RGB image or a TOF image to generation of a three-dimensional image as a single unit. In another embodiment, a part of the functions is implemented by an external information processing apparatus, and the image-capturing device and the external apparatus constitute an image-capturing system 200.

The image-capturing system 200 in FIG. 16 includes an image-capturing device 1D and a display device 500. The display device 500 is an example of the external information processing apparatus described above.

The image-capturing device 1D in FIG. 16 includes image sensors 11A and 11A, TOF sensors 13a and 13a, light source units 12A and 12A, and a shooting switch 15, which are configured in the same manner as those in FIG. 2.

The processing circuit 4 in the image-capturing device 1 illustrated in FIG. 16 includes a control unit 141, an RGB image data acquisition unit 142, a TOF image data acquisition unit 144, and a transmission-reception unit 180. The control unit 141 has the same configuration as that of FIG. 2.

Similarly to FIG. 2, the RGB image data acquisition unit 142 acquires RGB image data captured by the image sensors 11a and 11A in accordance with the instructions to capture an image from the control unit 14, and outputs the full-spherical RGB image data. However, the RGB image data acquisition unit 142 in FIG. 16 outputs the full-spherical RGB image data to the transmission-reception unit 180, which differs from that of FIG. 2.

Similarly to FIG. 2, the TOF image data acquisition unit 144 acquires the TOF image data generated by the TOF sensors 13a and 13A in accordance with the instruction to generate TOF image data, output from the control unit 141, and outputs TOF image data of the full sphere. However, the TOF image data acquisition unit 144 in FIG. 16 outputs the TOF data to the transmission-reception unit 180, which differs from that of FIG. 2.

Unlike FIG. 2, the transmission-reception unit 180 transmits (outputs), to the display device 500, the full-spherical RGB image data output from the RGB image data acquisition unit 142 and the full-spherical TOF image data output from the TOF image data acquisition unit 144.

The display device 500 in FIG. 16 includes a transmission-reception unit 510, a display unit 520, a display control unit 530, an RGB image data acquisition unit 542, a monochrome processing unit 543, a TOF image data acquisition unit 544, a resolution enhancement unit 545, a matching processing unit 546, a reprojection processing unit 547, a semantic segmentation unit 548, a disparity calculation unit 549, a three-dimensional reconstruction processing unit 550, and a determination unit 560.

The transmission-reception unit 180 receives the full-spherical RGB image data and the full-spherical TOF image data transmitted from the image-capturing device 1D.

The RGB image data acquisition unit 542 acquires the full-spherical RGB image data from the transmission-reception unit 180, and the TOF image data acquisition unit 544 acquires the full-spherical TOF image data from the transmission-reception unit 180. The remaining configurations of the RGB image data acquisition unit 542 and the TOF image data acquisition unit 544 are similar to those of the RGB image data acquisition unit 142 and the TOF image data acquisition unit 144 in FIG. 2.

The monochrome processing unit 543, the TOF image data acquisition unit 544, the resolution enhancement unit 545, the matching processing unit 546, the reprojection processing unit 547, the semantic segmentation unit 548, the disparity calculation unit 549, the three-dimensional reconstruction processing unit 550, and the determination unit 560 are configured similarly to the monochrome processing unit 143, the TOF image data acquisition unit 144, the resolution enhancement unit 145, the matching processing unit 146, the reprojection processing unit 147, the semantic segmentation unit 148, the disparity calculation unit 149, the three-dimensional reconstruction processing unit 150, and the determination unit 160 in FIG. 2.

The display control unit 530 acquires the full-spherical RGB image data from the RGB image data acquisition unit 542 and causes the display unit 520 to display a two-dimensional image based on the acquired full-spherical RGB image data. Alternatively, the display control unit 530 acquires the full-spherical three-dimensional data from the three-dimensional reconstruction processing unit 550 and causes the display unit 520 to display three-dimensional image.

The display control unit 530 causes the display unit 520 to display a display image including information indicating the determination result acquired from the determination unit 160 and a two-dimensional image or a three-dimensional image.

As described above, the display device 500 includes the transmission-reception unit 510 (an example of a receiver) that receives an output of the imager 11 that captures an image of an object to be captured and an output of the distance-information acquisition unit (the photosensor 13) that receives light reflected from the object after emitting light to the object; the determination unit 560 that determines the presence or absence of a particular object based on the output from the distance-information acquisition unit (the photosensor 13) and the output from the imager 11, which are received by the transmission-reception unit 510; and the display control unit 530 that causes a display unit to display a display image, which differs according to the presence or absence of the particular object based on the determination result of the determination unit 560.

Examples of the particular object includes a near object, a high-reflection object, a far object, a low-reflection object, and an image-blurring region.

The display device 500 includes the display control unit 530 that causes the display unit 520 to display a display image including identification information for identifying a particular object and a three-dimensional image 3G determined by the three-dimensional reconstruction processing unit 550 based on the determination result of the determination unit 560 that determines whether the particular object is present based on both an output of the imager 11 that captures an image of the object and an output of the distance-information acquisition unit (the photosensor 13) that receives light reflected from the object after emitting light to the object.

Notably, the display device 500 is an example of an information processing apparatus (external information processing apparatus) outside the image-capturing device 1D. The display device 500 is, for example, a personal computer (PC), a server, a smartphone, or a tablet PC.

Unlike the image-capturing device 1 according to an embodiment, the image-capturing system 200 includes the TOF image data acquisition unit 544 as a range sensor (ranging unit) in the information processing apparatus outside the image-capturing device 1D. The external information processor also serves to generate a three-dimensional image.

The image-capturing device 1D merely serves to capture an RGB image or a TOF image. As described above, the image-capturing device 1D of the image-capturing system 200 merely acquires image information. This simplifies the structure of the image-capturing device 1D and achieves weight reduction and miniaturization. Since the image-capturing device 1D is to be held by the operator during use, the weight reduction and miniaturization of the image-capturing device 1D increases usability.

According to a first aspect, an image-capturing device (1) includes: an imager (10) extending along a first axis (C1), the imager (10) configured to capture an image; and a grip (20) coupled to the imager (10), extending along a second axis (C2) tilted to the first axis (C1), and having an elongated shape to have a periphery thereof gripped with hand of an operator of the image-capturing device (1).

According to a second aspect, the image-capturing device (1) according to the first aspect, the first axis (C1) is orthogonal to a rotation axis (C3) of each of ulnar flexion and radial flexion of the hand of the operator gripping the grip (20).

According to a third aspect, the image-capturing device (1) according to the first or second aspect, the second axis (C2) is tilted relative to the first axis (C1) in a direction to reduce an angle of ulnar flexion or radial flexion of the hand, the first axis (C1) being a vertical direction of the image-capturing device (1) in use.

According to a fourth aspect, the image-capturing device (1) according to any one of the first to third aspect, a tilt angle of the second axis (C2) relative to the first axis (C1) is from 125 to 175 degrees.

According to a fifth aspect, the image-capturing device (1) according to any one of the first to fourth aspects, the grip (20) includes: a first finger support (21) configured to contact a base portion of a first finger of the operator gripping the grip (20); and a support (23, 24, 25) configured to contact at least one of a third finger, a fourth finger, and a fifth finger of the operator. The support (23, 24, 25) is on a side of the grip (20). The first finger support (21) is on the other side of the grip (20) with the second axis (C2) between the first finger support (21) and the support (23, 24, 25). The second axis (C2) is tilted relative to the first axis (C1) in a direction toward the support (23, 24, 25).

According to a sixth aspect, in the image-capturing device (1) according to the fifth aspect, the support includes: a third finger support (23) configured to contact a third finger of the operator; a fourth finger support (24) configured to contact a fourth finger of the operator; and a fifth finger support (25) configured to contact a fifth finger of the operator. The first finger support (21) and the third finger support (23) are closer to the imager (10) than the fourth finger support (24) and the fifth finger support (25) in the grip (20).

According to a seventh aspect, in the image-capturing device (1) according to the fifth or sixth aspect, at least one of the third finger support (23), the fourth finger support (24), and the fifth finger support (25) is a concave surface recessed toward the second axis (C2).

According to an eighth aspect, in the image-capturing device (1) according to the fifth or sixth aspect, the third finger support (23), the fourth finger support (24), and the fifth finger support (25) are integrated together along the second axis (C2) to form a convex surface (28) in which a surface of the fourth finger support (24) is furthest from the second axis (C2), and surfaces of the third finger support (23) and the fifth finger support (25) are closer to the second axis (C2) than the surface of the fourth finger support (24).

According to a ninth aspect, in the image-capturing device (1) according to any one of the first to eighth aspects, the grip (20) includes a bottom portion (26) at an end of the grip (20), opposite to the other end proximate to the imager (10). The bottom portion (26) has an outer shape to allow a projection point (I), at which center of gravity (H) of the image-capturing device (1A) is projected on a virtual plane (P) including the bottom portion (26), to fall within a range of the bottom portion (26).

According to a tenth aspect, in the image-capturing device (1) according to the ninth aspect, the virtual plane (P) is orthogonal to the first axis (C1).

According to an eleventh aspect, the image-capturing device (1) according to any one of the first to tenth aspects further includes a tilt-angle adjuster (27) configured to adjust a tilt angle of the grip (20) relative to the imager (10).

According to a twelfth aspect, in the image-capturing device (1) according to any one of the first to eleventh aspects, the imager (10) includes multiple red-green-blue (RGB) imager around the first axis (C1).

According to a thirteenth aspect, in the image-capturing device (1) according to any one of the first to twelfth aspects, the imager (10) includes: a phototransmitter (12) configured to emit light to an object to be captured; and a photosensor (13) configured to receive light reflected from the object.

According to a fourteenth aspect, the image-capturing device (1) according to the thirteenth aspect, further includes a ranging unit (144) configured to output information on a distance to the object based on time of light emission of the phototransmitter (12) and time of light reception of the photosensor (13).

According to a fifteenth aspect, an image-capturing system (200) includes: the image-capturing device (ID) according to the thirteenth aspect; and an information processing device (500) including a ranging unit (544) configured to output information on a distance to the object based on time of light emission of the phototransmitter (12) and time of light reception of the photosensor (13).

The present embodiment has been described above with reference to specific examples. However, the present

**EP 4 124 907 A1**

disclosure is not limited to these specific examples. These specific examples to which appropriate design modifications are added by those skilled in the art are also included in the scope of the present disclosure as long as the features of the present disclosure are included. Each element included in each specific example described above and the arrangement, condition, shape, and the like thereof are not limited to those illustrated, and can be appropriately changed. The elements included in the specific examples described above may be combined as appropriate as long as there is no technical contradiction.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

**Claims**

1. An image-capturing device (1) comprising:

   an imager (10) extending along a first axis (C1), the imager (10) configured to capture an image; and
   a grip (20) coupled to the imager (10), extending along a second axis (C2) tilted to the first axis (C1), and having an elongated shape to have a periphery thereof gripped with hand of an operator of the image-capturing device (1).

2. The image-capturing device (1) according to claim 1,
   wherein the first axis (C1) is orthogonal to a rotation axis (C3) of each of ulnar flexion and radial flexion of the hand of the operator gripping the grip (20).

3. The image-capturing device (1) according to claim 1 or 2,
   wherein the second axis (C2) is tilted relative to the first axis (C1) in a direction to reduce an angle of ulnar flexion or radial flexion of the hand, the first axis (C1) being a vertical direction of the image-capturing device (1) in use.

4. The image-capturing device (1) according to any one of claims 1 to 3,
   wherein a tilt angle of the second axis (C2) relative to the first axis (C1) is from 125 to 175 degrees.

5. The image-capturing device (1) according to any one of claims 1 to 4,
   wherein the grip (20) includes:

   a first finger support (21) configured to contact a base portion of a first finger of the operator gripping the grip (20); and
   a support (23, 24, 25) configured to contact at least one of a third finger, a fourth finger, and a fifth finger of the operator,
   wherein the support (23, 24, 25) is on a side of the grip (20),
   wherein the first finger support (21) is on the other side of the grip (20) with the second axis (C2) between the first finger support (21) and the support (23, 24, 25), and
   wherein the second axis (C2) is tilted relative to the first axis (C1) in a direction toward the support (23, 24, 25).

6. The image-capturing device (1) according to claim 5,
   wherein the support includes:

a third finger support (23) configured to contact a third finger of the operator;
a fourth finger support (24) configured to contact a fourth finger of the operator; and
a fifth finger support (25) configured to contact a fifth finger of the operator,
wherein the first finger support (21) and the third finger support (23) are closer to the imager (10) than the fourth finger support (24) and the fifth finger support (25) in the grip (20).

7. The image-capturing device (1) according to claim 5 or 6,
wherein at least one of the third finger support (23), the fourth finger support (24), and the fifth finger support (25) is a concave surface recessed toward the second axis (C2).

8. The image-capturing device (1) according to claim 5 or 6,
wherein the third finger support (23), the fourth finger support (24), and the fifth finger support (25) are integrated together along the second axis (C2) to form a convex surface (28) in which a surface of the fourth finger support (24) is furthest from the second axis (C2), and surfaces of the third finger support (23) and the fifth finger support (25) are closer to the second axis (C2) than the surface of the fourth finger support (24).

9. The image-capturing device (1) according to any one of claims 1 to 8,

wherein the grip (20) includes a bottom portion (26) at an end of the grip (20), opposite to the other end proximate to the imager (10), and
wherein the bottom portion (26) has an outer shape to allow a projection point (I), at which center of gravity (H) of the image-capturing device (1A) is projected on a virtual plane (P) including the bottom portion (26), to fall within a range of the bottom portion (26).

10. The image-capturing device (1) according to claim 9,
wherein the virtual plane (P) is orthogonal to the first axis (C1).

11. The image-capturing device (1) according to any one of claims 1 to 10, further comprising a tilt-angle adjuster (27) configured to adjust a tilt angle of the grip (20) relative to the imager (10).

12. The image-capturing device (1) according to any one of claims 1 to 11,
wherein the imager (10) includes multiple red-green-blue (RGB) imager around the first axis (C1).

13. The image-capturing device (1) according to any one of claims 1 to 12, wherein the imager (10) includes:

a phototransmitter (12) configured to emit light to an object to be captured; and
a photosensor (13) configured to receive light reflected from the object.

14. The image-capturing device (1) according to claim 13, further comprising a ranging unit (144) configured to output information on a distance to the object based on time of light emission of the phototransmitter (12) and time of light reception of the photosensor (13).

15. An image-capturing system (200) comprising:

the image-capturing device (ID) according to claim 13; and
an information processing device (500) including a ranging unit (544) configured to output information on a distance to the object based on time of light emission of the phototransmitter (12) and time of light reception of the photosensor (13).

# FIG. 1

# FIG. 2

1

| 11A | 11a | 13A | 13a | 12A | 12a |
|---|---|---|---|---|---|
| IMAGE SENSOR | IMAGE SENSOR | TOF SENSOR | TOF SENSOR | LIGHT SOURCE UNIT | LIGHT SOURCE UNIT |

14
PROCESSING CIRCUIT

15
SHOOTING SWITCH

141
CONTROL UNIT

142
RGB IMAGE DATA ACQUISITION UNIT

144
TOF IMAGE DATA ACQUISITION UNIT

143
MONOCHROME PROCESSING UNIT

145
RESOLUTION ENHANCEMENT UNIT

160
DETER-MINATION UNIT

147
REPROJECTION PROCESSING UNIT

148
SEMANTIC SEGMENTATION UNIT

MATCHING PROCESSING UNIT

146

DISPARITY CALCULATION UNIT ~149

THREE-DIMENSIONAL RECONSTRUCTION PROCESSING UNIT ~150

DISPLAY CONTROL UNIT (OUTPUT UNIT) ~170

TRANSMISSION-RECEPTION UNIT (OUTPUT UNIT)
180

DISPLAY UNIT ---30

400

300
EXTERNAL DEVICE

# FIG. 3A

IMAGE-CAPTURING AREA
CENTRAL AXIS C1

IMAGE-CAPTURING AREA R

13

10

12

11

C2

13

1

θ

12

20

$\theta_N$

NON-IMAGE-CAPTURING AREA N

# FIG. 3B

IMAGE-CAPTURING AREA R

C1

1

ULNAR FLEXION ANGLE A OF WRIST

RADIAL FLEXION ANGLE B OF SHOULDER JOINT

NON-IMAGE-CAPTURING AREA N

# FIG. 4

FIG. 5A

COMPARATIVE EXAMPLE

IMAGE-CAPTURING SYSTEM IS HELD VERTICALLY

C1   100

IMAGE-CAPTURING AREA R

S

OBJECT

BLIND SPOT N

GROUND

GROUND VIEWED FROM ABOVE

S

OBJECT

BLIND SPOT N

FIG. 5B

COMPARATIVE EXAMPLE

IMAGE-CAPTURING SYSTEM IS TILTED

C1   100

G

IMAGE-CAPTURING AREA R

F

S

OBJECT

BLIND SPOT N

GROUND

GROUND VIEWED FROM ABOVE

S

OBJECT

BLIND SPOT N

EP 4 124 907 A1

# FIG. 6A

D

# FIG. 6B

E

D

# FIG. 7

ULNAR FLEXION OF WRIST                                                                                     UNIT(° )

| GENDER/AGE | MALE | | | | | FEMALE | | | | |
|---|---|---|---|---|---|---|---|---|---|---|
| | 20-29 | 30-39 | 40-49 | 50-69 | 60-69 | 20-29 | 30-39 | 40-49 | 50-69 | 60-69 |
| NUMBER OF SUBJECTS | 11 | 9 | 10 | 12 | 34 | 12 | 12 | 12 | 16 | 32 |
| AVERAGE | 53.6 | 50.0 | 52.0 | 45.4 | 46.0 | 53.3 | 52.5 | 51.3 | 45.3 | 46.7 |
| STANDARD DEVIATION | 10.7 | 5.6 | 5.4 | 10.3 | 8.2 | 9.6 | 12.0 | 7.7 | 7.2 | 6.6 |
| MAXIMUM | 75 | 55 | 60 | 65 | 60 | 65 | 70 | 65 | 60 | 60 |
| MINIMUM | 35 | 40 | 45 | 35 | 25 | 35 | 30 | 40 | 35 | 35 |

EP 4 124 907 A1

# FIG. 8

RADIAL FLEXION OF SHOULDER JOINT
UNIT(°)

| GENDER/AGE | MALE | | | | | FEMALE | | | | |
|---|---|---|---|---|---|---|---|---|---|---|
| | 20-29 | 30-39 | 40-49 | 50-69 | 60-69 | 20-29 | 30-39 | 40-49 | 50-69 | 60-69 |
| NUMBER OF SUBJECTS | 11 | 9 | 10 | 12 | 34 | 12 | 12 | 12 | 16 | 32 |
| AVERAGE | 172.7 | 174.4 | 173.0 | 169.2 | 172.1 | 171.7 | 176.7 | 177.1 | 173.4 | 168.9 |
| STANDARD DEVIATION | 9.8 | 7.3 | 9.5 | 10.0 | 10.4 | 11.3 | 9.6 | 4.5 | 7.7 | 9.8 |
| MAXIMUM | 180 | 180 | 180 | 180 | 195 | 180 | 190 | 180 | 180 | 180 |
| MINIMUM | 150 | 160 | 160 | 150 | 155 | 145 | 155 | 170 | 155 | 140 |

EP 4 124 907 A1

# FIG. 9

| RADIAL FLEXION B OF SHOULDER JOINT | ULNAR FLEXION A OF WRIST | ANGLE E BETWEEN PILLAR AND HAND GRIPPING PILLAR | $\theta$ FOR VERTICALLY HOLDING IMAGER OF IMAGE-CAPTURING SYSTEM |
|---|---|---|---|
| 130° | 15° | 10° | 165° |
| 130° | 15° | 20° | 175° |
| 170° | 15° | 10° | 125° |
| 170° | 15° | 20° | 135° |

EP 4 124 907 A1

# FIG. 10

| | TILT ANGLE $\theta$ | ULNAR FLEXION A OF WRIST | RADIAL FLEXION B OF SHOULDER JOINT | ANGLE E BETWEEN PILLAR AND HAND GRIPPING PILLAR | ANGLE F OF IMAGER (AT RIGHT ANGLE, 90 DEGREES) | ANGLE DIFFERENCE G BETWEEN IMAGER AND VERTICAL DIRECTION |
|---|---|---|---|---|---|---|
| (EMBODIMENT) | 150° | 15° | 130° | 10° | 75° | |
| | 150° | 15° | 130° | 20° | 65° | |
| $\theta =150°$ | 150° | 15° | 150° | 10° | 95° | ±25° |
| | 150° | 15° | 150° | 20° | 85° | |
| | 150° | 15° | 170° | 10° | 115° | |
| | 150° | 15° | 170° | 20° | 105° | |
| (COMPARATIVE EXAMPLE) | 180° | 15° | 130° | 10° | 105° | |
| | 180° | 15° | 130° | 20° | 95° | |
| SIMPLE STRAIGHT PILLAR | 180° | 15° | 150° | 10° | 125° | |
| $\theta =180°$ | 180° | 15° | 150° | 20° | 115° | 5 to 55° |
| | 180° | 15° | 170° | 10° | 145° | |
| | 180° | 15° | 170° | 20° | 135° | |

EP 4 124 907 A1

# FIG. 11A

POSITION OF CENTER OF GRAVITY H

C1

1A

10

20

26

θ

I

P

C2

# FIG. 11B

POSITION OF CENTER OF GRAVITY H

C1

1

10

20

26

θ

I

P

C2

FIG. 12A   FIG. 12B   FIG. 12C

26A

I

26B

I

26C

I

EP 4 124 907 A1

## FIG. 13

| | TILT ANGLE $\theta$ | ULNAR FLEXION A OF WRIST | RADIAL FLEXION B OF SHOULDER JOINT | ANGLE E BETWEEN PILLAR AND HAND GRIPPING PILLAR | ANGLE F OF IMAGER (AT RIGHT ANGLE, 90 DEGREES) | ANGLE DIFFERENCE G BETWEEN IMAGER AND VERTICAL DIRECTION |
|---|---|---|---|---|---|---|
| (MODIFICATION 1) | 165° | 15° | 130° | 10° | 90° | |
| | 165° | 15° | 130° | 20° | 80° | |
| | 165° | 15° | 150° | 10° | 110° | |
| $\theta$ =165° | 165° | 15° | 150° | 20° | 100° | −10 to 40° |
| | 165° | 15° | 170° | 10° | 130° | |
| | 165° | 15° | 170° | 20° | 120° | |
| (COMPARATIVE EXAMPLE) | 180° | 15° | 130° | 10° | 105° | |
| | 180° | 15° | 130° | 20° | 95° | |
| SIMPLE STRAIGHT PILLAR | 180° | 15° | 150° | 10° | 125° | 5 to 55° |
| $\theta$ =180° | 180° | 15° | 150° | 20° | 115° | |
| | 180° | 15° | 170° | 10° | 145° | |
| | 180° | 15° | 170° | 20° | 135° | |

EP 4 124 907 A1

FIG. 14A

FIG. 14B

FIG. 15A

FIG. 15B

# FIG. 16

200

**1D**

| 11A | 11a | 13A | 13a | 12A | 12a |
|---|---|---|---|---|---|
| IMAGE SENSOR | IMAGE SENSOR | TOF SENSOR | TOF SENSOR | LIGHT SOURCE UNIT | LIGHT SOURCE UNIT |

PROCESSING CIRCUIT ~14

141

CONTROL UNIT

15

SHOOTING SWITCH

142~ RGB IMAGE DATA ACQUISITION UNIT

TOF IMAGE DATA ACQUISITION UNIT ~144

TRANSMISSION-RECEPTION UNIT (OUTPUT UNIT) ~180

**500**

TRANSMISSION-RECEPTION UNIT (OUTPUT UNIT) ~510

542
RGB IMAGE DATA ACQUISITION UNIT

544
TOF IMAGE DATA ACQUISITION UNIT

543
MONOCHROME PROCESSING UNIT

545
RESOLUTION ENHANCEMENT UNIT

560
DETER-MINATION UNIT

547
REPROJECTION PROCESSING UNIT

548
SEMANTIC SEGMENTATION UNIT

546
MATCHING PROCESSING UNIT

DISPARITY CALCULATION UNIT ~549

THREE-DIMENSIONAL RECONSTRUCTION PROCESSING UNIT ~550

DISPLAY CONTROL UNIT (OUTPUT UNIT) ~530

DISPLAY UNIT ~520

Europäisches
Patentamt

European
Patent Office

Office européen
des brevets

# EUROPEAN SEARCH REPORT

Application Number

EP 22 17 7883

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/142598 A1 (REID TYLER [US]) 19 May 2016 (2016-05-19) * abstract * * figures 1, 2 * * paragraphs [0001], [0002], [0005] * | 1-15 | INV. G03B17/02 G03B17/56 G03B37/04 |
| X | CN 109 611 664 A (GUILIN ZHISHEN INFORMATION TECH CO LTD) 12 April 2019 (2019-04-12) * abstract * * figures 5, 6 * * paragraphs [0005] – [0016] * | 1 | |
| X | WO 2015/101822 A1 (MASTORTECH LTD [CN]) 9 July 2015 (2015-07-09) * abstract * * figures 3-5 * * pages 2-5 * | 1 | |
| X | US 5 585 849 A (ROBALINO MANUEL [US]) 17 December 1996 (1996-12-17) * abstract * * figure 1 * * columns 2-6 * | 1 | |

TECHNICAL FIELDS
SEARCHED      (IPC)

G03B

The present search report has been drawn up for all claims

| Place of search | Date of completion of the search | Examiner |
|---|---|---|
| Munich | 18 November 2022 | Seifter, Achim |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 17 7883

This annex lists the patent family members relating to the patent documents cited in the above-mentioned European search report.
The members are as contained in the European Patent Office EDP file on
The European Patent Office is in no way liable for these particulars which are merely given for the purpose of information.

18-11-2022

| Patent document cited in search report | Publication date | Patent family member(s) | Publication date |
|---|---|---|---|
| US 2016142598 A1 | 19-05-2016 | US 2015042830 A1<br>US 2016142598 A1<br>WO 2015003099 A1 | 12-02-2015<br>19-05-2016<br>08-01-2015 |
| CN 109611664 A | 12-04-2019 | NONE | |
| WO 2015101822 A1 | 09-07-2015 | NONE | |
| US 5585849 A | 17-12-1996 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5910485 B